# EUROPEAN PATENT APPLICATION

(11) **EP 4 717 337 A1**
(43) Date of publication of application: **01.04.2026**
(21) Application number: 24202875.1
(22) Date of filing: 26.09.2024
(51) Int. Cl.: B01D 1/00, B01D 27/00

(54) **AN OIL RECLAMATION UNIT WITH A DISPERSION PLATE**

(71) Applicant: Greenoil Standard A/S, 8400 Ebeltoft (DK)
(72) Inventor: Klemmensen Kjærgaard, Jan, 8400 Ebeltoft (DK); Kondrup Danielsen, Michael, 8400 Ebeltoft (DK); Majeed Barko Majey, Keuo, 8400 Ebeltoft (DK)
(74) Representative: Patrade A/S

(57) **Abstract**

The present invention relates to a reclamation unit for a liquid comprising: a housing comprising: an upper part, and a lower part, a base part, said base part comprising: a heating source, a number of inlets and a number of outlets, at least one filter unit, an evaporation chamber, said chamber comprising: at least one chamber side wall a separator plate, and a dispersion plate, wherein the dispersion plate is arranged between the filter unit and the separator plate for dispersing the liquid.

Furthermore, the invention relates to a method of reclamation of oil.

## Description

### FIELD OF THE INVENTION

The present invention relates to a reclamation unit for a liquid comprising: a housing comprising: an upper part, and a lower part, a base part, said base part comprising: a heating source, one or more inlets and one or more outlets, at least one filter unit, an evaporation chamber, said chamber comprising: at least one chamber side wall, a separator plate, and a dispersion plate,
wherein said lower part is connected with the base part, and said lower part and said base part form the evaporation chamber, wherein said upper part encloses the at least one filter unit, wherein said connection between said lower part and said base part is provided with a separator plate arranged for leading said liquid from said filter unit onto side walls of said evaporator chamber, and wherein the dispersion plate is arranged between the filter unit and the separator plate for dispersing the liquid.

Furthermore, the invention relates to a method of reclamation of oil, wherein the method comprises the following steps: providing an oil reclamation unit, comprising: a filter unit, an evaporator chamber with side walls, a dispersion plate, leading liquid from a filter unit onto side walls of an evaporator chamber of the reclamation unit, dispersing the liquid drain-plate arranged between the filter unit and the separator plate, wherein the steps of the method can be executed in any order and/or executed simultaneously.

### BACKGROUND OF THE INVENTION

In many types of equipment, liquid is used as by way of example a lubricant, a coolant, a propellant or the like, and the liquid is circulated in closed systems. Even so the liquid is exposed to by way of example temperature changes, contaminants, and water that degrade the efficiency of the liquids as e.g. a lubricant, a coolant or a propellant, and there is a risk of damaging the equipment by circulating the liquid too many times in the closed system.

One very expensive and impractical way to resolve this problem is to supply a continuous flow of new liquid to the equipment and discharge the liquid when it has passed through the equipment.

A more practical solution is to fit the equipment with a reclamation unit that provides removal of solid contaminants and water when liquid is passed through the reclamation unit. The reclamation unit can either process all the liquid or be a by-pass unit that continuously processes a fraction of the fluid so that the liquid is maintained at a high level of quality.

A number of oil reclamation devices are known, and the oil reclamation devices can remove water and solid contaminants when the oil is passed through the devices, but there are a number of disadvantages in the construction of these devices.

The devices all use a heating element encased in a base element of heat conductive material, which together with an approximately complementary part, forms the evaporation chamber. When the heating element is turned on, the heat will be distributed through the base element into e.g. protruding fins or ring walls of the counterpart upon which a thin oil film will pass, hence the oil is heated, and the water is evaporated.

A main disadvantage of this construction of the evaporation chamber where there is a direct contact between the heat surface and the oil, is that there is a high risk of superheating the oil whereby the characteristics of the oil will be changed and thus the oil becomes unusable with the connected equipment.

Another disadvantage of this construction of the evaporation chamber is that the walls of the entire evaporation chamber are heated, and the wanted temperature in the evaporation chamber or on the contact surfaces will only be obtained with a high energy consumption because there is a relatively high energy loss to the enclosing environment and the material mass of the base element, and the protruding fins or ring walls must be heated.

Yet another disadvantage of this construction of the evaporation chamber is that when the oil is heated, it causes heat loss from the oil, and furthermore the heating of the oil particles will not contribute to further evaporation of water.

Hence, an improved reclamation unit, preferably an efficient and reliable unit would be advantageous, and in particular a more resistant, mechanical strong, economically, sustainable unit with longevity would be advantageous.

### OBJECT OF THE INVENTION

It is an object of the present invention to provide an alternative to the prior art.

It is an object of the present invention to provide a reclamation unit, which efficiently removes solid contaminants and water from a liquid, by way of example oil, with low energy consumption and the risk of damage due to superheating of the liquid is reduced.

### DESCRIPTION OF THE INVENTION

In the following the reclamation unit is described as an oil reclamation unit, but it should be noted that the reclamation unit may be used with other liquids where it is necessary to remove solid contaminants and water.

The above described object and several other objects are intended to be obtained in a first aspect of the invention by providing a reclamation unit for a liquid comprising:
- a housing comprising:
   - an upper part, and
   - a lower part,
- a base part, said base part comprising:
   - a heating source,
   - a number of inlets and a number of outlets,
- at least one filter unit,
- an evaporation chamber, said chamber comprising:
   - at least one chamber side wall,
- a separator plate
- a dispersion plate

wherein said lower part is connected with the base part, and said lower part and said base part form the evaporation chamber,
wherein said upper part encloses the at least one filter unit,
wherein said connection between said lower part and said base part is provided with a separator plate arranged for leading said liquid from said filter unit onto side walls of said evaporator chamber, and
wherein the dispersion plate is arranged between the filter unit and the separator plate for dispersing the liquid.

The invention is particularly, but not exclusively, advantageous for providing a reclamation unit provided to filter and remove water and solid contaminants from liquids, such as oil.

The reclamation unit of the invention allows easy maintenance and inspection.

The filter materials are selected for high capacity and long durability.

The reclamation unit has a housing with removable upper and lower parts, where the lower part includes a heating source and an evaporation chamber.

The filter unit is located above the evaporation chamber, allowing the oil to flow downwards by gravity.

Preferably, the separator plate is arranged in a lower level than the dispersion plate, such as under the dispersion plate and/or such as arranged between the dispersion plate and the base part.

In one embodiment of the invention, one or more cutouts under the filter unit are provided.

Preferably, such that the bottom part of the filter unit comprises cutouts, and preferably oval shaped cutouts.

The cutouts are made so that the oil is distributed most optimally along the periphery above the evaporation chamber.

This function ensures that the oil spreads evenly on the walls of the chamber and forms a uniform oil film, which is important for efficient evaporation of any water content.

The reclamation unit can be used with different filters and can be integrated into existing equipment or used as a mobile device.

The unit includes a dispersion plate, which advantageous function is to support the filter unit, isolate heat and guide the oil flow and ensure an even dispersion/distribution of the oil on the chamber walls.

The even dispersion/distribution ensures that the oil spreads correctly and forms a homogeneous layer on the walls, maximizing the surface area which is important for the efficiency of the subsequent evaporation process.

The dispersion plate is formed to ensure that the oil is dispersed and/or distributed effectively over the sides of the chamber, which further contributes to an efficient evaporation of water from the oil.

The dispersion plate may be such as a disc, a plate or the like.

The unit includes a separation plate, and a particularly important function of the separator plate is its ability to prevent condensation of steam on the filter unit.

This may be achieved by forming an airtight oil film on the walls of the evaporation chamber. This oil film acts as a barrier that prevents steam from contacting the filter unit, protecting the filter from moisture and extending its life.

In one embodiment of the invention, the separation plate comprises edges having a curvature in an upwards direction.

In one embodiment of the invention, the separation plate comprises edges having slits.

There may be slits in the edge, where the oil flows through to the filter.

An advantage of this is to distribute the oil evenly over the evaporator chamber.

The embodiments of the separator plate may ensure, where there are smaller slits in the edge, that oil can only distribute along the periphery of the evaporation chamber. The separator plate has four main functions:
- it supports the filter unit,
- it guides the oil to the edge of the evaporator chamber where it is distributed onto the side wall and forms an airtight oil film preventing steam to enter the filter unit, and
- it insulates the heat in the evaporation chamber from the filter unit whereby steam and heat are prevented to condense at the filter unit because the evaporator chamber is completely closed.

The exact control of the oil flow and the thickness of the oil film ensures that the process runs optimally, resulting in a cleaner and more efficient recovery of oil.

The heating unit preferably heats the oil through a combination of convection and radiant heat. In this context, heat transmission refers to the transfer of heat through mechanisms such as conduction, convection, and radiation. Convection heat occurs through the movement of molecules in liquids or gases, where warmer air rises and colder air sinks. Radiant heat, on the other hand, transfers heat through electromagnetic waves without direct contact between the heat source and the heated substance.

In the reclamation unit, it is preferred that the heating source uses both convection and radiant heat transfer.

The convection heat transfer ensures a distribution of the heated and cold air and thus constant replacement of the air layer in the immediate vicinity of the oil film.

This contributes to the constant supply of drier air across the thin, homogeneously distributed oil film. This partly contributes to heating the oil for easier release of water, just as the dry air can more easily absorb water vapor created by the radiant heat.

The radiant heat is able to go deeper into the oil film and also get hold of the water particles and molecules that lie deeper in the oil film.

In one embodiment of the invention, radiant heating is realized by using a temperature-regulated heating element, which is controlled in relation to fluctuating ambient and oil temperature, preferably in order to concentrate a high and the same effect on a smaller area.

The effect of the heat effect is composed of both convection heat and radiant heat on the oil film. The efficiency is thus controlled by the temperature that the reclamation unit can heat the oil by convection, and the effect that the reclamation unit can transfer to control the surface temperature of the heater. Combination of convection and radiant heating ensures that the oil is heated efficiently while limiting heat loss and increasing the overall heat transfer efficiency.

Within the invention, it may be understood, that in some embodiment, radiant heat allows removal of more water than the convection heat, but the convection heat and the natural circulation ensure that the air circulates such that it is dry air that absorbs the moisture.

This is particularly advantageous when greater evaporation is current.

In one embodiment, the heat source is at least a spiral heating element.

Preferably, the heating element being of 60 or 120 W, depending on the size of the system.

The heating source may comprise cold zones for limiting heat loss to the chamber walls.

By having a relatively long spiral, a large surface is provided and thereby a low surface temperature, so that oil does not burn if the oil is dripping onto the heating surfaces.

The advantage is the provided convection heat.

The system may have the advantages of having a surface temperature that is high enough to allow evaporation by radiant heat and low enough to avoid damaging the oil. The radiant heat effect is at least partly provided due to a high surface temperature.

By increasing the output of the heater / heating source, the efficiency also increases. Likewise, efficiency also increases if oil temperature is increased, which also increases the temperature of the heating source.

The increased heat effect is ensured by radiant heat. The radiant heat is able to go deeper into the oil film and also get hold of the water particles and molecules that lie deeper in the oil film.

To ensure efficient heat transfer and high quality of the treated liquid, the unit preferably uses both convection and radiant heat, which is particularly useful in conditions with low natural ventilation.

In one embodiment, the reclamation unit comprises one or more openings in the top and/bottom of the chamber.

Preferably via one or more steam pipe(s) from the top of the chamber.

Through an opening via steam pipe(s) from the top of the chamber, natural circulation is ensured.

The natural circulation is promoted by the density difference created when the dry air is saturated. This may be due to both the changed density of the air per volume unit and the much larger volume of water when it changes to steam.

The passage in the chamber when opening at the bottom and top enables air and moisture to move, which is an advantage compared to a closed chamber, where only the excess pressure controls replacement.

Replacement and water separation is further enhanced by mounting on an oil tank with variable height on the surface, as this will push the amount of air/moisture that is in the evaporation chamber.

Furthermore, a perforated mesh plate may be arranged between the filter unit and the separator plate.

An advantage is to ensure that the edges and surfaces of the filter do not trap the oil when the filter pressure presses the filter down against the separator plate.

Furthermore, it ensures uniform distribution of oil along the periphery.

In the reclamation unit, a plate with grooves may by comprised.

The plate preferably has the same function as the perforated mesh plate.

An advantage is to ensure that the oil must be able to flow out radially under the filter insert without loss of pressure.

In one embodiment of the invention, the base part comprises one or more breathing tubes in the bottom of the base part, preferably for providing ventilation.

In one embodiment of the invention, the reclamation unit comprises:
- one or more breathing tubes arranged through the bottom of the base part, said breathing tube having an outlet being outside the chamber and an inlet being inside the chamber,
- preferably said inlet being in the upper half part of the evaporation chamber.

In the context of the present invention, "breathing tube" may be understood as steam pipe or the like.

The tube enables the air to circulate through the evaporation chamber.

The ventilation provided by the breathing tubes is preferably natural ventilation. The ventilation provides the air to be dried out and that the humidity is decreased.

In one embodiment of the invention, the reclamation unit comprises one or more openings in the top and/or bottom of the reclamation unit, preferably at least the base part (13) comprises one or more openings.

In one embodiment of the invention, an oil outlet is arranged at the bottom of the evaporation chamber and/or base part.

The oil outlet being provided as a size being a sufficient opening for air passage.

Overall, the reclamation unit comprising a housing with a detachable upper and lower part where said lower part is connected with a base part, which comprises at least one heating unit and a number of inlets and outlets where said upper part encloses a filter unit, and where said lower part and said base part form an evaporation chamber. Thus, the reclamation unit is of the type where the filter unit is arranged on top of the evaporation chamber, which is advantageous because due to gravity, the oil will automatically flow downwards, and only small amounts of oil will be left in the filter unit when the reclamation unit is not used or disposed of.

As the heating unit is protruding into said evaporator chamber with no conductive contact to said side walls, and the separator plate forces the oil outwards onto the side wall of the evaporator chamber, the heating unit will never be in contact with the oil film on the side wall. Hence the heating of the oil will be caused at least partly by convective heat transfer to the atmosphere enclosed in the evaporation chamber, allowing only the surface of the oil film to be heated, and therefore the evaporation process in the reclamation unit uses a very small amount of heat because it is not necessary to heat the evaporation chamber walls in order to prohibit condensation of formed steam. Heating of the evaporation chamber walls causes a large amount of heat loss to the surroundings and furthermore heats the oil in this process.

Within the invention, it should be understood that heating the oil is preferably also caused at least partly by radiant heat, preferably such that the radiant heat intrudes the oil film and enhances evaporation.

The evaporation process in the reclamation unit utilizes a central heating unit that by convection heats the evaporation chamber atmosphere. The surface temperature and surface area of the heating unit can be adjusted so as to reduce the amount of radiated heat energy which will contribute to heat loss by heating the flowing oil in the evaporation chamber. The convective heat transfer from the hot atmosphere in the evaporation chamber to the surface of flowing oil film on the evaporation chamber wall causes evaporation of water from the oil. Preferably also the radiant heat causes such evaporation.

Furthermore, when the heating unit is not in contact with the side wall of the evaporation chamber, due to the conductive effect, the surroundings will retain the side wall of the evaporation chamber at a temperature lower than the temperature of the evaporation chamber atmosphere. Thus, there is not a high energy loss from the reclamation unit to the surroundings, and furthermore the risk of superheating the oil is reduced significantly.

In one embodiment, the reclamation unit comprises an accumulator tank for the purified oil to be collected in the filter system.

In one embodiment of invention, the evaporation chamber and one or more down-stream sections are in free or controlled fluid communication via the oil outlet.

By downstream section may be understood the reservoir/tank etc. to which the filter is connected that is in direct contact with this either as free flow or controlled via integrated tank.

In one embodiment of invention, the one of the down-stream sections is an accumulation tank for temporarily storing reclaimed oil and wherein the unit is arranged to ensure that the evaporation chamber is ventilated by regulating the oil content of the accumulation tank.

In one embodiment of invention, the unit comprises a separator pipe arranged to ensure that separation chamber and/or accumulation tank is provided with an air stream.

In one embodiment of invention, the air seam is provided by one or more integrated air sources.

In one embodiment of invention, the heating unit is protruding into said evaporator chamber with no conductive contact to said side walls.

In a preferred embodiment of the invention, the heating unit is a heating coil whereby conductive heat transfer occurs directly from the heating coil to the oil film on the side wall of the evaporation chamber. Due to fact that the size of the evaporation chamber is designed to provide sufficient surface area of the oil film, the heating coil will typically leave much open space in the evaporation chamber. This is not a disadvantage because the convective heat transfer is more efficient when there is space for circulating the air.

Furthermore, it is possible to provide heating coils with cold zones whereby it is possible to isolate the heating coil from the base part whereby heating of the base part is avoided and further heat loss to the surrounding.

In one embodiment of the present invention, the base part furthermore comprises at least one pressure indicator, at least one steam indicator, and preferably a number of flow regulators.

The reclamation unit can be used as an insert unit in equipment and be dependent on the oil flow being generated by a pump or the like integrated in the oil system of the equipment.

Thus, it is only possible to use the reclamation unit when the oil system is active.

Instead of using an internal pump in the oil system of the equipment, the reclamation unit in one embodiment of the present invention furthermore comprises a pump unit, hence it is possible to connect and use the reclamation unit in oil systems where there is no oil flow.

Furthermore, a reclamation unit with a pump unit can be used as a mobile unit by which it is possible to very easily move the reclamation unit from one set of equipment to another.

It is then possible to use the reclamation unit with a pump unit to equipment not in use while other equipment is in use and then periodically switch between the set of equipment, hence the oil in both sets of equipment will have a high quality. Preferably also a reservoir, such as a tank, is provided in such embodiment of the invention.

When used as a mobile unit, the reclamation unit can be mounted in a rack or a box for easy handling or for protecting the housing or more delicate parts of the reclamation unit, by way of example pressure gauge or pump. Furthermore, the rack or box can be used as mounting device for the reclamation unit.

In a second aspect of the invention, the invention relates to a method of reclamation of oil, wherein the method comprises the following steps:
- providing a reclamation unit, said unit comprising at least:
   - a filter unit,
   - an evaporator chamber with side walls,
   - a dispersion plate,
- leading liquid from a filter unit onto side walls of an evaporator chamber of the reclamation unit,
- dispersing the liquid via the dispersion plate arranged between the filter unit and the evaporator chamber,
- heating the liquid via a combination of convection and radiant heat, preferably wherein the heating step comprises:
   - transferring heat through electromagnetic waves without direct contact between a heating source and the liquid, and/or
   - using a temperature-regulated heating element, which is controlled in relation to fluctuating ambient and oil temperature
wherein the steps of the method can be executed in any order and/or executed simultaneously.

The first and second aspect of the present invention may each be combined with any of the other aspects. These and other aspects of the invention will be apparent from and elucidated with reference to the embodiments described hereinafter.

Embodiments from the system/product should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

The invention is explained in more detail below with reference to the accompanying drawing, where:
- Fig. 1: shows an exploded view of a reclamation unit according to the invention,
- Fig. 2: shows cross sections of the reclamation unit in Fig. 1,
- Fig. 3: shows a detail view of the lower part of the housing and the base part according to the invention,
- Fig. 4: shows a cross section of a base part according to the invention,
- Fig. 5: shows a front view of the reclamation unit, according to the invention.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

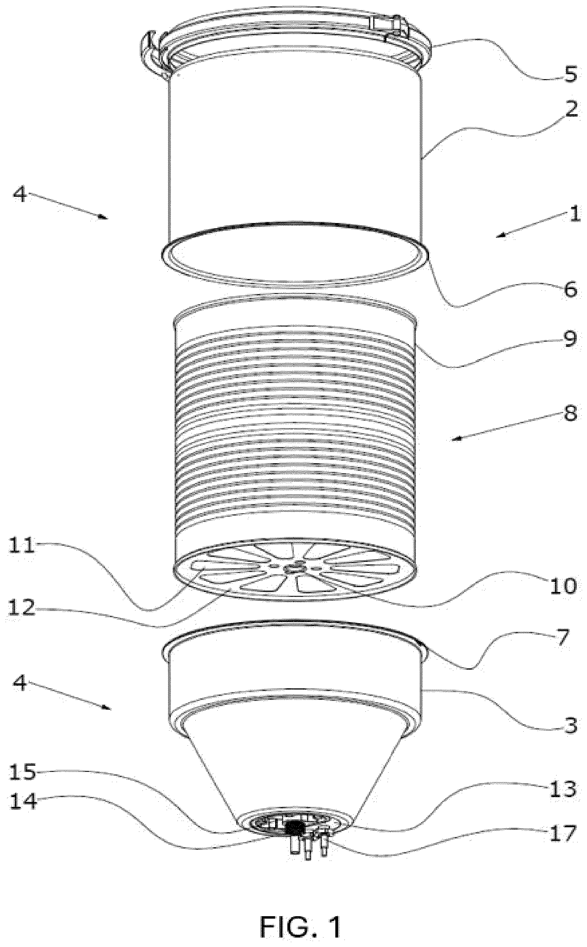

FIG. 1 shows the different parts of a reclamation unit 1, comprising an upper part 2 and a lower part 3 of a housing 4, which is connectable in an airtight manner by a conical lever band 5, where the conical lever band 5 engages with a lower edge 6 of the upper part 2 and an upper edge 7 of the lower part 3. Inside the upper part 2 of the housing 4 is enclosed a filter unit 8 comprising a filter canister 9, with a central inlet tube 10 and a number of outlet holes 11 in the bottom lid 12. The lower part 3 of the housing 4 is connected to a base part 13, which is provided with an oil inlet 14, an oil outlet 15 and a heating coil 17.

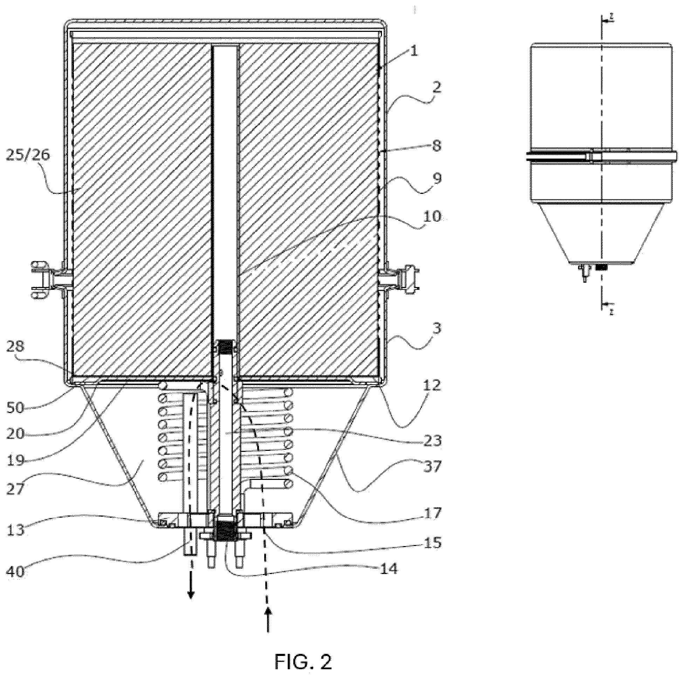

Furthermore, FIG. 1 illustrates a unit wherein, when being connected:
- a connection between said lower part 3 and said base part 13 is provided with a separator plate 19 arranged for leading said liquid from said filter unit 8 onto side walls 37 of said evaporator chamber 27, and
- wherein a dispersion plate 50 (not shown - See FIG. 2) is arranged between the filter unit and the separator plate for dispersing the liquid.

FIG. 2 shows cross sections of the reclamation unit 1. To give a better understanding of the construction of the reclamation unit 1, a detailed description is given below of the oil way through the reclamation unit 1.

Moreover, FIG. 2 illustrates the dispersion plate 50 is arranged to ensure that oil can be drained from the filter unit with a minimized pressure drop and the base part 13 comprises one or more breathing tubes 40 for providing ventilation.

Also is illustrated in FIG. 2, that the separation plate 19 comprises edges 20 being curved / having a curvature up in an upwards direction.

The heating unit 17 is protruding into said evaporator chamber 27 with no conductive contact to said side walls 37.

In one embodiment, the reclamation unit and its function may be, as described in the following. It must be understood that the following description should be seen as an example and not necessarily a limitation:
Oil enters the reclamation unit 1 at oil inlet 14, which is shown as a standard hose fitting.

The filter unit 8 is protected from uncontrolled excess oil flow that could damage the filter unit 8 structure caused by pressure variations at the oil inlet 14. Furthermore, by maintaining oil flow at a controlled steady level, filter contamination is directly proportional to increased pressure.

The oil passes through an ascension tube 23 up into the inlet tube 10 in the filter canister 9 and distributes through a coarse filter material 25/26, which is hydrophobic treated natural wool fibers.

Oil passes through the first filter material 25 into the second filter material 26, which may be of fine mesh treated natural cotton where very small solid contaminants are retained. If the fibers of the second filter material 26 furthermore are acid-neutralizing fibers, they cause neutralization of acid contaminant as well. After the second filter material, the oil passes through a second filter membrane 28 and leaves the filter canister 9 through the outlet holes (not shown) in the bottom lid 12 of the filter canister 9. The second filter membrane 28 prevents fibers from the second filter material 26 to pass out of the outlet holes (not shown).

Oil enters the evaporator chamber 27 via separator plate 19 who guides the oil to the side walls 37 of the evaporator chamber 27 where the oil forms an airtight oil film. The separator plate 19 has four main functions. It supports the filter canister 9, it guides oil to the edge of the evaporator chamber 27, it prevents oil to flow underneath the separator plate 19 and it insulates the heat in the evaporation chamber 27 from the filter unit 8. Hence steam and heat is prevented to condense at the filter canister 9, because the evaporator chamber 27 is completely closed off.

The evaporation chamber 27 is heated by an electrical heater coil 17, which is arranged encircling the ascension tube 23 and with a distance to the side walls 37 of evaporation chamber 27, hence the heating of the oil film is due to convection.

Oil flows down the evaporator chamber's 27 side walls 37 forming a thin film with maximum surface area. When the dewatered oil reaches the bottom of the side walls 37, it fills the lower part of the evaporation chamber 27. The oil leaves the reclamation unit 1 through oil outlet 15 shown as a hose connection fitting.

In normal operation, steam formed in the evaporation chamber 27 leaves the chamber and out to the atmospheric pressure.

Also, in FIG. 2 is illustrated one breathing tube 40 arranged through the bottom of the base part 13, said breathing tube 40 having an outlet being outside the chamber and an inlet being inside the chamber, said inlet being in the upper half part of the evaporation chamber 27.

From the breathing tube the steam/water from the evaporation is preferably led out into the open through a (short) hose (not shown). The tube enables the air to circulate through the evaporation chamber as illustrated with the dotted line. The dotted line thereby illustrates natural ventilation / circulation of air.

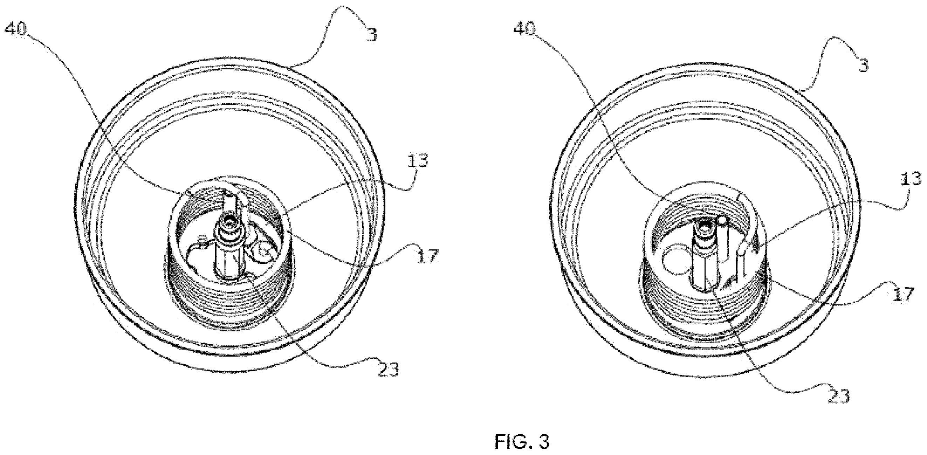

FIG. 3 shows a detail view of the lower part 3 of the housing 4 and the base part 13, where the heating coil 17 encircles the ascension tube 23.

Moreover, FIG. 3 illustrates that the base part 13 comprises one or more breathing tubes 40 for providing ventilation.

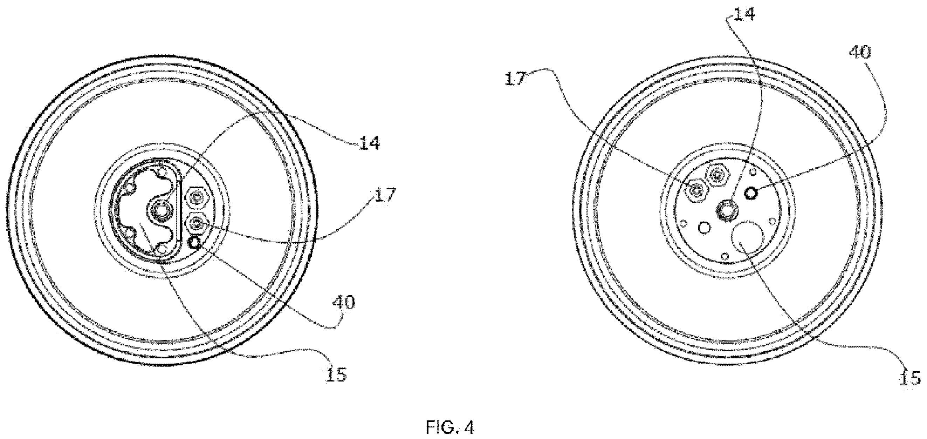

FIG. 4 shows a cross section of the base part 13 where it is possible to see the arrangement of the oil inlet 14, the oil outlet 15 and the heating coil 17.

Moreover, FIG. 4 illustrates that the base part 13 comprises different types of base parts (base plates) with different shaped outlets 15.

Furthermore, a reclamation unit comprising one or more openings in the bottom of the reclamation unit is illustrated in FIG. 4. Within the invention, it is preferred that at least the base part 13 comprises one or more openings for providing ventilation.

Also, the reclamation unit comprising a breathing tube 40 in the bottom of the base part 13 is illustrated.

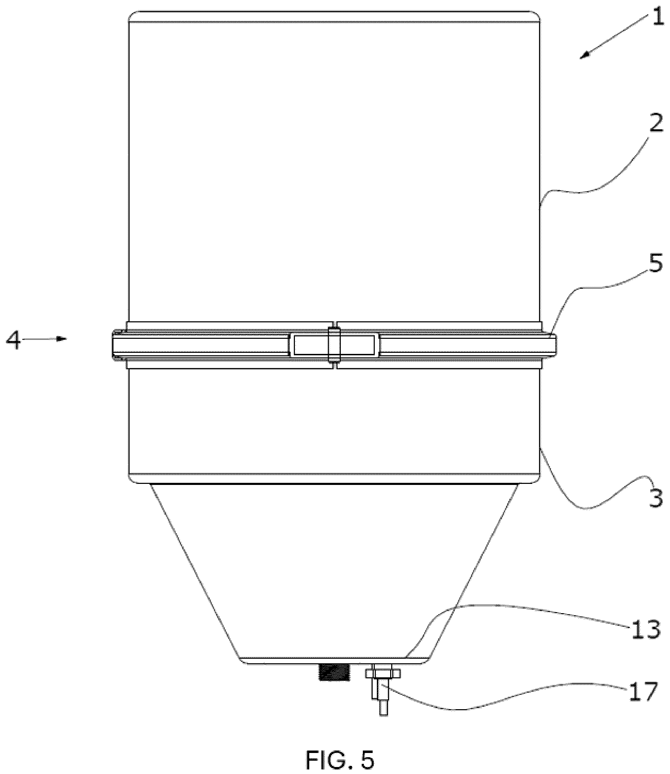

FIG. 5 shows a front view of the reclamation unit 1 where it is assembled, and the conical lever band 5 connects the upper part 2 and the lower part 3 of the housing 4. This makes it very easy to see if there is any water in the oil and to monitor the rate of contamination of the filter unit (not shown).

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A reclamation unit (1) for a liquid, preferably being oil, comprising:
- a housing (4) comprising:
- an upper part (2), and
- a lower part (3),
- a base part (13), said base part comprising:
- a heating source (17), and
- one or more inlets (14) and one or more outlets (15)
- at least one filter unit (8),
- an evaporation chamber (27), said chamber comprising:
- at least one chamber side wall (37),
- a separator plate (19), and
- a dispersion plate (50),
wherein said lower part (3) is connected with the base part (13), and said lower part (3) and said base part (13) form the evaporation chamber (27),
wherein said upper part (2) encloses the at least one filter unit (8), and
wherein said connection between said lower part (3) and said base part (13) is provided with a separator plate (19) arranged for leading said liquid from said filter unit (8) onto side walls (37) of said evaporator chamber (27), and
wherein the dispersion plate (50) is arranged between the filter unit and the separator plate for dispersing the liquid.

2. The reclamation unit (1) according to one or more of the preceding claims, wherein the dispersion plate (50) is arranged for ensuring that oil can be drained from the filter unit with a minimized pressure drop.

3. The reclamation unit (1) according to one or more of the preceding claims, wherein the dispersion plate (50) is a perforated plate, preferably a mesh plate.

4. The reclamation unit (1) according to one or more of the preceding claims, wherein the separation plate comprises:
- edges having cut-outs, preferably said cut-out being slits,
and/or
- edges (20) having a curvature in an upwards direction.

5. The reclamation unit (1) according to one or more of the preceding claims, wherein the reclamation unit comprises one or more openings in the top and/or bottom of the base part (13), preferably for providing ventilation.

6. The reclamation unit (1) according to one or more of the preceding claims, wherein the reclamation unit comprises:
- one or more breathing tubes (40) arranged through the bottom of the base part (13), said breathing tube (40) having an outlet being outside the chamber and an inlet being inside the chamber,
- preferably said inlet being in the upper half part of the evaporation chamber (27).

7. The reclamation unit (1) according to one or more of the preceding claims, wherein the evaporation chamber (27) and one or more downstream sections are in free or controlled fluid communication via the oil outlet.

8. The reclamation unit (1) according to claim 7, wherein one of the down-stream sections is an accumulation tank for temporarily storing reclaimed oil and wherein the unit is arranged to ensure that the evaporation chamber is ventilated by regulating the oil content of the accumulation tank.

9. The reclamation unit (1) according to any of the preceding claims, wherein the bottom part of the filter unit comprises cutouts, preferably oval shaped cutouts.

10. The reclamation unit (1) according to one or more of the preceding claims, wherein the unit comprises a separator pipe arranged to ensure that separation chamber and/or accumulation tank is provided with an air stream.

11. A reclamation unit (1) according to one or more of the preceding claims, wherein said heating unit (17) is protruding into said evaporator chamber (27) with no conductive contact to said side walls (37).

12. A reclamation unit (1) according to one or more of the preceding claims, wherein when the unit (1) is in use, the unit is adapted to heat the liquid through a combination of convection and radiant heat.

13. A reclamation unit (1) according to one or more of the preceding claims, wherein, when the unit (1) is in use:
- heat is transferred through electromagnetic waves without direct contact between the heating source (17) and the liquid,
and/or
- radiant heating is realized by using a temperature-regulated heating element, which is controlled in relation to fluctuating ambient and oil temperature.

14. A method of reclamation of oil, preferably in a reclamation unit (1) according to one or more of the claims 1-14, wherein the method comprises the following steps:
- providing a reclamation unit, preferably in an oil reclamation unit according to one or more of the claims 1-14, said unit comprising at least:
- a filter unit (8),
- an evaporator chamber (27) with side walls,
- a dispersion plate (50),
- leading liquid from a filter unit onto side walls of an evaporator chamber (27) of the reclamation unit,
- dispersing the liquid via the dispersion plate (50) arranged between the filter unit and the evaporator chamber,
- heating the liquid via a combination of convection and radiant heat, preferably wherein the heating step comprises:
- transferring heat through electromagnetic waves without direct contact between a heating source (17) and the liquid, and/or
- using a temperature-regulated heating element, which is regulated in relation to fluctuating ambient and oil temperature
wherein the steps of the method can be executed in any order and/or executed simultaneously.

15. A method according to claim 14, wherein the method further comprises the step of:
- providing a natural ventilation of the evaporation chamber (27),
- preferably provided via openings at the top and/or bottom of the chamber, such as provided via a steam pipe being arranged at the top of the evaporation chamber and/or a breathing tube (40) provided in the bottom of the chamber (27)
